# EUROPÄISCHE PATENTSCHRIFT

(11) **EP 2 854 556 B1**
(45) Veröffentlichungstag und Bekanntmachung des Hinweises auf die Patenterteilung: **13.07.2016**
(21) Anmeldenummer: 13737411.2
(22) Anmeldetag: 29.05.2013
(51) Int. Cl.: A23B 4/052

(54) **RAUCHERZEUGUNGSVORRICHTUNG**
SMOKE GENERATION DEVICE
DISPOSITIF DE GÉNÉRATION DE FUMÉE

(30) Priorität: 29.05.2012 EP 12169855
(43) Veröffentlichungstag der Anmeldung: 08.04.2015
(73) Patentinhaber: ecogold AG, 9472 Grabs (CH)
(72) Erfinder: SAWATZKI, Bruno, 9467 Frümsen (CH)
(74) Vertreter: Patentbüro Paul Rosenich AG
(86) Internationale Anmeldenummer: PCT/IB2013/054427
(87) Internationale Veröffentlichungsnummer: WO 2013/179235

(56) Entgegenhaltungen:
- DE-A1- 2 137 477
- DE-A1- 3 204 723
- DE-A1- 19 842 178
- DE-A1-102004 053 981
- DE-C1- 4 312 151
- DE-U- 7 125 298
- US-A1- 2004 208 969

## Beschreibung

Die Erfindung betrifft eine Raucherzeugungsvorrichtung zur Erzeugung von Rauch, insbesondere von Rauch zur Behandlung von Lebensmitteln, mittels rauchfähigen Guts nach dem Oberbegriff des Anspruchs 1. Weiter betrifft die Erfindung eine Reibeinrichtung einer derartigen Raucherzeugungsvorrichtung sowie eine Räucheranlage mit einer derartigen Raucherzeugungsvorrichtung.

Eine Räucheranlage ist eine Einrichtung, in welcher durch Räucherrauch, d. h. einem Gemisch aus Gasen, Aerosolen und Dämpfen von unvollständig verbranntem bzw. pyrolytisch zersetztem Räuchermaterial, Lebensmittel behandelt werden. Diese Behandlung dient insbesondere zur Verlängerung der Haltbarkeit und/oder zur Beeinflussung des Geschmacks des Lebensmittels.

Eine Räucheranlage umfasst alle in räumlichem und funktionellem Zusammenhang stehenden Komponenten, wie beispielsweise eine Raucherzeugungsvorrichtung zur Erzeugung von Rauch mittels rauchfähigen Guts, eine Klimatisierungseinrichtung, eine Abluftbehandlungseinrichtung, Verbindungs- und Abgaskanäle sowie Armaturen und Nebeneinrichtungen.

Aus der EP 1 258 199 A1 ist eine Raucherzeugungsvorrichtung zur Erzeugung von Rauch, insbesondere zur Behandlung von Lebensmitteln, mittels rauchfähigen Guts bekannt. Die Raucherzeugungsvorrichtung weist einen Aufnahmeraum für das rauchfähige Gut und als Reibeinrichtung ein Reibrad auf, das eine dem Aufnahmeraum zugewandte Reibfläche für den Abtrag des rauchfähigen Guts aufweist. Das Reibrad wird direkt von einem unterhalb des Reibrades angeordneten Elektromotor angetrieben. Zur Erzeugung des Rauchs wird bei dieser Raucherzeugungsvorrichtung das rauchfähige Gut mit einer definierten Kraft auf das mit ca. 3'000 U/min (Umdrehungen pro Minute) rotierende Reibrad angedrückt. Eine weitere mit dieser bekannten Raucherzeugungsvorrichtung vergleichbare Raucherzeugungsvorrichtung ist in der DE 198 42 178 A1 gezeigt.

Nachteilig an diesen bekannten Lösungen ist, dass zur Raucherzeugung der Elektromotor mit einer hohen Drehzahl drehen muss und somit die Raucherzeugungsvorrichtung einen hohen Lärmpegel aufweist. Zudem ist bei dieser bekannten Lösung der Elektromotor Verschmutzungen durch Asche und durch abgetragenes, rauchfähiges Gut ausgesetzt, so dass zur Gewährleistung der Gebrauchstauglichkeit der Elektromotor z. B. entsprechend verschalt beziehungsweise verkapselt werden muss.

Aus der EP 2 340 717 A2 ist eine weitere Raucherzeugungsvorrichtung zur Erzeugung von Rauch, insbesondere zur Behandlung von Lebensmitteln, mittels rauchfähigen Guts bekannt. Die Raucherzeugungsvorrichtung weist einen Aufnahmeraum für das rauchfähige Gut und als Reibeinrichtung ein zylinderförmiges Reibrad auf, dessen Mantelfläche eine dem Aufnahmeraum zugewandte Reibfläche für den Abtrag des rauchfähigen Guts aufweist. Auch dieses Reibrad wird von einem Antriebsmotor angetrieben, der jedoch in einem separaten, vom Aufnahmeraum und von dem Reibrad abgetrennten Abschnittsbereich der Raucherzeugungsvorrichtung angeordnet ist. Dieses Reibrad kann mit Wasserdampf versorgt werden. In der Reibfläche sind Bohrungen vorgesehen, welche als Austrittsöffnungen für den dem Reibrad zugeführten Wasserdampf dienen. Mithilfe des Wasserdampfs kann vor Beginn der Raucherzeugung das Reibrad erwärmt werden.

Nachteilig an dieser bekannten Lösung ist insbesondere die komplexe konstruktive Ausgestaltung der Raucherzeugungsvorrichtung. Des Weiteren ergibt sich durch die zylindrische Reibfläche eine ungünstige Abtragung des rauchfähigen Guts, was sich nachteilig auf die Raucherzeugung auswirkt. Des Weiteren sind derartige Raucherzeugungsvorrichtungen nur bedingt für mehrschichtig aufgebautes rauchfähiges Gut geeignet, da es bei dem Übergang zwischen zwei Schichten durch den konkaven Abtrag zu einer lang andauernden Vermischung des durch die unterschiedlichen Schichten bedingten Rauchgeschmacks kommt.

Aus der DE 21 37 477 A ist eine weitere Raucherzeugungsvorrichtung bekannt, welche als Reibeinrichtung ein zylinderförmiges, jedoch aus mehreren nebeneinander angeordneten Scheiben gebildetes Reibrad aufweist. Die zylinderförmigen Mantelflächen des mehrscheibigen Reibrads bilden die dem Aufnahmeraum zugewandte Reibfläche für den Abtrag des rauchfähigen Guts.

Auch diese bekannte Lösung weist insbesondere den vorgenannten Nachteil des ungünstigen Abtrags des rauchfähigen Guts auf.

Aus der DE 71 25 298 U ist eine Raucherzeugungsvorrichtung zur Erzeugung von Rauch, insbesondere zur Behandlung von Lebensmitteln, mittels eines Holzstücks als rauchfähiges Gut bekannt. Die Raucherzeugungsvorrichtung weist einen Aufnahmeraum für das rauchfähige Gut und eine Schwellplatte mit einer dem Aufnahmeraum zugewandte Reibfläche für den Abtrag des rauchfähigen Guts als Reibeinrichtung auf. Zur Erzeugung des Rauchs beziehungsweise zum Abtrag des rauchfähigen Guts ist das rauchfähige Gut mittels einer Verdreheinrichtung relativ und in eine Richtung parallel zur Reibfläche der Schwellplatte bewegbar.

Nachteilig an der bekannten Lösung ist, dass der Abtrag des rauchfähigen Guts über eine gewisse Gebrauchsdauer der Raucherzeugungsvorrichtung abnimmt. Um zumindest über einem mittleren Zeitraum einen einigermassen ausreichenden Abtrag des rauchfähigen Guts an der Schwellplatte sicherzustellen, muss bei dieser Raucherzeugungsvorrichtung das rauchfähige Gut horizontal der Schwellplatte zugeführt werden und die Reibfläche der Schwellplatte senkrecht dazu, nämlich vertikal, ausgerichtet sein. Dadurch benötigt diese bekannte Raucherzeugungsvorrichtung einen entsprechenden grossen Bauraum, welcher oftmals in den üblichen Herstellungsbetrieben nicht zur Verfügung steht. Dadurch ist zumeist eine Nachrüstung eines Betriebes mit dieser Raucherzeugungsvorrichtung verunmöglicht. Des Weiteren ist die Befüllung mit dem rauchfähigen Gut aufgrund der konstruktiven Ausgestaltung der Raucherzeugungsvorrichtung aufwändig.

Aufgabe der vorliegenden Erfindung ist es somit, eine Raucherzeugungsvorrichtung zu schaffen, welche die vorgenannten Nachteile nicht aufweist und insbesondere einen wesentlich geringeren Lärmpegel im Betrieb der Raucherzeugungsvorrichtung aufweist. Des Weiteren ist es die Aufgabe der Erfindung, eine Reibeinrichtung für eine solche Raucherzeugungsvorrichtung zu schaffen. Des Weiteren soll ein "kalter" Rauch mit dieser Raucherzeugungsvorrichtung beziehungsweise mit dieser Reibeinrichtung erzeugbar sein.

Die Aufgabe für die Raucherzeugungsvorrichtung wird durch die Merkmale des unabhängigen Anspruchs 1 gelöst. Vorteilhafte Weiterbildungen sind in den Figuren und in den vom Anspruch 1 abhängigen Patentansprüchen dargelegt.

Gemäss der Erfindung ist das rauchfähige Gut derart im Aufnahmeraum angeordnet, dass das rauchfähige Gut im Betrieb der Antriebseinrichtung exzentrisch zu einem Zentrum der Reibfläche der Reibeinrichtung über diese geführt ist.

Unter dem Begriff "Zentrum der Reibfläche" wird in diesem Zusammenhang der Mittelpunkt der entsprechend ausgestalteten Form der Reibfläche bzw. der Reibeinrichtung verstanden. Beispielsweise ist das "Zentrum der Reibfläche" bei einer kreisförmigen Ausgestaltung der Reibfläche bzw. der Reibeinrichtung der Kreismittelpunkt. Bei einer mehreckigen oder ellipsenförmigen Ausgestaltung der Reibfläche bzw. der Reibeinrichtung wäre das "Zentrum der Reibfläche" der Mittelpunkt der entsprechenden Fläche, beispielsweise bei einer viereckigen Ausgestaltung der Reibfläche bzw. der Reibeinrichtung der Schnittpunkt der Diagonalen des Vierecks.

Da das rauchfähige Gut ausserhalb des Zentrums der Reibfläche über diese geführt ist, wird ein Stau des abgetragenen Materials des rauchfähigen Guts zwischen diesem und der Reibfläche, wie er bei einer Zuführung des rauchfähigen Guts genau im Zentrum der Reibfläche auftritt, weitgehend verhindert. Durch die erfindungsgemässe Ausgestaltung der Raucherzeugungsvorrichtung kann das rauchfähige Gut bei Gewährleistung einer optimalen Raucherzeugung ohne weiteres auch aus einer vertikalen Richtung der Reibfläche der Reibeinrichtung zugeführt werden.

Die Bewegung kann eine Rotationsbewegung, eine translatorische Bewegung oder eine Bewegung entlang einer beliebigen Kurve sein. Die Bewegungsrichtung (entlang einer Kreislinie, einer geraden Linie oder einer sonstigen Kurve) liegt in einer Ebene, die im Wesentlichen parallel zu einer von der Reibfläche der Reibeinrichtung aufgespannten Ebene verläuft.

Die Antriebseinrichtung zur Bewegung des rauchfähigen Guts relativ zur Reibeinrichtung kann innerhalb oder ausserhalb des Aufnahmeraums und insbesondere in Bezug auf einen Aschenbereich, in welchem von der Reibeinrichtung abgetragene Asche zu liegen kommt, ausserhalb desselben, vorgesehen werden. Dadurch kann die Antriebseinrichtung, welche beispielsweise einen Motor, insbesondere einen Elektromotor, umfasst, ohne massgeblichen konstruktiven Aufwand in Bereichen der Raucherzeugungsvorrichtung vorgesehen werden, in welchen diese keinen oder nur geringen auf die Antriebseinrichtung und insbesondere auf das Antriebsmittel wirkenden nachteiligen Einflüssen ausgesetzt ist.

Des Weiteren kann eine Antriebseinrichtung vorgesehen werden, welche einen insbesondere im Hinblick auf die aus dem Stand der Technik bekannten Lösungen wesentlich geringen Lärmpegel aufweist. Bei der erfindungsgemässen Raucherzeugungsvorrichtung sind daher keine oder nur geringe lärmtechnische Massnahmen erforderlich, um den Anwender vor Lärm zu schützen.

Unter dem Begriff "rauchfähiges Gut" wird jedes Rauchgutmaterial verstanden, welches zum Zweck der Raucherzeugung geeignet ist. Neben Balken oder Brettern aus Holz können auch Baumzapfen, Gewürze, Stroh oder andere Geschmacksträger als rauchfähiges Gut verwendet werden. Des Weiteren können auch Kombinationen aus verschiedenen geeigneten Materialien zur Anwendung kommen, welche beispielsweise vorgängig zu einem Körper miteinander verpresst werden.

Bevorzugt ist die Reibeinrichtung drehfest in der Raucherzeugungsvorrichtung angeordnet, so dass lediglich das rauchfähige Gut bewegt wird. Da keine beweglichen Teile für die Befestigung der Reibeinrichtung benötigt werden, ist die Reibeinrichtung konstruktiv einfach in der Raucherzeugungsvorrichtung anordnenbar. Zudem lässt sich eine solche Reibeinrichtung einfach auswechseln. Vorteilhaft ist die Reibeinrichtung nicht nur drehfest sondern auch ortsfest in der Raucherzeugungsvorrichtung angeordnet, was die konstruktive Ausgestaltung der Befestigung der Reibeinrichtung zusätzlich vereinfacht und gleichzeitig eine konstante Druckbelastung auf die Reibfläche der Reibeinrichtung durch das rauchfähige Gut ermöglicht.

Alternativ wird die drehfest angeordnete Reibeinrichtung in Richtung des rauchfähigen Guts federbeaufschlagt, wobei die Reibeinrichtung vorteilhaft mit einer vorbestimmten bzw. fest eingestellten oder einer steuerbaren Kraft beaufschlagt wird. Dadurch lässt sich beispielsweise im Kontaktbereich zwischen dem rauchfähigen Gut und der Reibfläche der Reibeinrichtung ein gewünschter Anpressdruck für einen vorteilhaften Aschenabtrag einstellen.

Bevorzugt ist eine Heizeinrichtung zum Erhitzen der Reibeinrichtung vorgesehen, welche zu einer schnellen Aschenbildung im Kontaktbereich des rauchfähigen Guts mit der Reibfläche der Reibeinrichtung führt. Somit kann bereits mit einer geringeren Bewegung des rauchfähigen Guts bereits Rauch erzeugt werden. Im Vergleich mit den aus dem Stand der Technik bekannten Lösungen sind daher kleinere und damit kostengünstigere Antriebseinrichtungen verwendbar. Umfasst die Antriebseinrichtung beispielsweise einen Elektromotor, so weist dieser einen vergleichsweise geringeren Stromverbrauch auf.

Vorteilhaft ist die Heizeinrichtung elektrisch betrieben, was eine effiziente und einfach steuerbare Erhitzung derselben ermöglicht. Diese Heizeinrichtung umfasst vorteilhaft eine Stromwendel, welche entsprechend ihrer räumlichen Ausdehnung eine flächige Erhitzung der Reibeinrichtung ermöglicht. Diese Variante ist besonders dann vorteilhaft, wenn die Antriebseinrichtung für die Reibeinrichtung ebenfalls elektrisch betrieben ist, da dann die bereits vorhandene Stromversorgung auch für diese Heizeinrichtung verwendbar ist. Da - wie zuvor dargelegt wurde - eine elektrisch betriebene Antriebseinrichtung für die Reibeinrichtung verwendet werden kann, welche einen vergleichsweise geringen Stromverbrauch aufweist, lässt sich bei dieser Ausführung der Raucherzeugungsvorrichtung die für die elektrisch betriebene Heizeinrichtung zusätzlich benötigte Strommenge kompensieren, so dass der gesamte Strombedarf der erfindungsgemässen Raucherzeugungsvorrichtung nicht wesentlich grösser beziehungsweise nahezu gleich oder im besten Fall sogar kleiner als bei bisher aus dem Stand der Technik bekannten Lösungen ist.

Vorzugsweise ist die Heizeinrichtung integrierter Bestandteil der Reibeinrichtung, womit eine kompakte und damit platzsparende Anordnung derselben möglich ist.

Bevorzugt ist eine Steuerungseinrichtung zur Steuerung der Temperatur der Heizeinrichtung vorgesehen, damit eine vorteilhafte Aschenbildung beispielsweise entsprechend der Materialart des rauchfähigen Guts und/oder der konstruktiven Ausgestaltung insbesondere der Reibeinrichtung gewährleistet ist.

Vorzugsweise ist zumindest ein Aufnahmebehälter für das rauchfähige Gut im Aufnahmeraum der Raucherzeugungsvorrichtung vorgesehen, der zumindest bereichsweise in Richtung der Reibfläche der Reibeinrichtung offen ist. In dem zumindest einen Aufnahmebehälter kann das rauchfähige Gut einfach angeordnet und der Reibeinrichtung zugeführt werden. Der zumindest eine Aufnahmebehälter weist vorteilhaft entlang seiner gesamten Längserstreckung, beispielsweise in eine im wesentlichen senkrecht auf die Reibfläche der Reibeinrichtung ausgerichteten Richtung, eine Wandung auf, so dass auch kleinere Materialstücke des rauchfähigen Guts verwendbar sind. Zudem erlaubt ein derartiger Aufnahmebehälter die Bestückung der Raucherzeugungsvorrichtung mit einer ausreichenden Menge an rauchfähigem Gut, so dass die Raucherzeugungsvorrichtung ohne eine Nachbeschickung über einen längeren Zeitraum, beispielsweise über Nacht, betreibbar ist. Dadurch lässt sich die Effizienz der Raucherzeugungsvorrichtung und einer Räucheranlage mit einer derartigen Raucherzeugungsvorrichtung massgeblich steigern.

Bevorzugt ist der Aufnahmebehälter relativ zur Reibeinrichtung bewegbar, was ein einfaches Abtragen der Aschenschicht des rauchfähigen Guts durch die Reibeinrichtung ermöglicht. Vorzugsweise erfolgt die Relativbewegung des Aufnahmebehälters relativ zur Reibeinrichtung gesteuert, so dass beispielsweise entsprechend der Materialart des rauchfähigen Guts und/oder der konstruktiven Ausgestaltung, insbesondere der Reibeinrichtung, ein vorteilhafter Aschenabtrag und somit eine ideale Raucherzeugung gewährleistbar ist.

Vorzugsweise ist der zumindest eine Aufnahmebehälter um eine Aufnahmebehälterrotationsachse rotierbar, was einerseits eine einfache konstruktive Ausgestaltung der Raucherzeugungsvorrichtung und eine vorteilhafte Relativbewegung des zumindest einen Aufnahmebehälters in Bezug auf die Reibeinrichtung ermöglicht. Die Antriebseinrichtung und insbesondere das Antriebsmittel für den Aufnahmebehälter kann an dessen Ende vorgesehen werden, dass dem der Reibeinrichtung zugewandten Ende gegenüberliegt. Somit kann die Antriebseinrichtung und insbesondere das Antriebsmittel einfach von dem Raum abgeschottet werden, in dem der Rauch erzeugt wird. Dadurch lassen sich unverkapselte Antriebsmittel oder Antriebseinrichtungen verwenden, welche günstig herstellbar sind und für die Fertigung der Raucherzeugungsvorrichtung als Massenprodukt zur Verfügung stehen.

Vorteilhaft ist die Aufnahmebehälterrotationsachse im Wesentlichen senkrecht zu einer von der Reibfläche der Reibeinrichtung aufgespannten Ebene ausgerichtet, womit eine besonders vorteilhafte konstruktive Ausgestaltung der Raucherzeugungsvorrichtung möglich ist.

Vorzugsweise ist eine Längsmittelachse des zumindest einen Aufnahmebehälters beabstandet zu der Aufnahmebehälterrotationsachse angeordnet, womit der zumindest eine Aufnahmebehälter exzentrisch zum Zentrum der Reibfläche bewegt wird. Durch die aussermittige Anordnung ergibt sich eine im Vergleich zu einer zentrischen Anordnung höhere Bewegungsgeschwindigkeit, was sich besonders vorteilhaft auf den Abtrag des rauchfähigen Guts auch über eine lange Gebrauchsdauer auswirkt. Dieser Vorteil ist insbesondere bei einer Anordnung des rauchfähigen Guts gegeben, welches entlang eines äusseren Randbereichs um die dazu beabstandete Aufnahmebehälterrotationsachse geführt wird.

In diesem Zusammenhang wird unter der "Längsmittelachse des zumindest einen Aufnahmebehälters" die Achse des Aufnahmebehälters verstanden, welche entlang der Längserstreckung des Aufnahmebehälters und durch den Mittelpunkt des quer zur Längserstreckung ausgerichteten Querschnitts des Aufnahmebehälters verläuft.

Bevorzugt weist der Aufnahmebehälter zumindest zwei, vorteilhaft parallel zueinander verlaufende Aufnahmeabteile zur Aufnahme des rauchfähigen Guts auf, in welchen gegebenenfalls auch unterschiedlichen Materialien von rauchfähigem Gut oder mehrere kleinere, z. B. gleichartige oder unterschiedliche, Materialeinheiten vorgesehen werden können. Wird als rauchfähiges Gut beispielsweise Holz verwendet, so kann dieses entweder derart in dem entsprechenden Aufnahmeabteil vorgesehen werden, dass der Aschenabtrag quer oder längs zur Holzfaserung erfolgt. Dadurch können mit dem gleichen Ausgangsmaterial unterschiedliche Arten von Rauch in einem Vorgang und einer Raucherzeugungsvorrichtung erzeugt werden.

Jedes Aufnahmeabteil weist eine Längsmittelachse auf, die beabstandet zur Aufnahmebehälterrotationsachse des zumindest einen Aufnahmebehälters verläuft, womit eine vorteilhafte exzentrisch zur Aufnahmebehälterrotationsachse beziehungsweise zum Zentrum der Reibfläche verlaufende Führung des rauchfähigen Guts auf der Reibfläche sichergestellt ist.

Vorzugsweise ist zumindest ein Vortriebsmittel für die Förderung des rauchfähigen Guts in Richtung der Reibeinrichtung vorgesehen, so dass das rauchfähige Gut in Richtung der Reibeinrichtung druckbeaufschlagt ist. Dadurch wird ein permanenter Aschenabtrag beim rauchfähigen Gut durch die Reibeinrichtung sichergestellt. Besonders vorteilhaft erfolgt die Förderung mit einer bestimmten Druckbelastung. Beispielsweise ist das Vortriebsmittel ein Gewichtselement, vorteilhaft von einer auf die Ausgestaltung der Reibeinrichtung abgestimmten Grösse.

Ist ein Aufnahmebehälter vorgesehen, so ist das Gewichtselement vorteilhaft auf die Querschnittsgrösse des oder der Aufnahmeabteile dieses Aufnahmebehälters abgestimmt ausgebildet. Umfasst der Aufnahmebehälter mehrere Aufnahmeabteile, so ist besonders vorteilhaft für jedes Aufnahmeabteil ein eigenes Gewichtselement vorgesehen.

Alternativ oder ergänzend dazu umfasst das Vortriebsmittel für die Förderung des rauchfähigen Guts in Richtung der Reibeinrichtung zumindest eine Fördereinrichtung, welche beispielsweise mechanisch oder hydraulisch ausgebildet ist. Umfasst der Aufnahmebehälter mehrere Aufnahmeabteile, so ist vorteilhaft für jedes Aufnahmeabteil eine separate Fördereinrichtung vorgesehen, welche weiter vorteilhaft gesteuert betrieben wird. Dabei können mehrere Fördereinrichtungen durch eine oder mehrere Steuereinrichtungen gleichzeitig oder separat voneinander gesteuert sein.

Bevorzugt ist eine Rauchmesseinrichtung zur Messung von Parametern des erzeugten Rauchs vorgesehen, welche zumindest einen entsprechend ausgebildeten Sensor umfasst. Beispielsweise wird die Rauchmenge, die Rauchdichte, die Rauchtemperatur, der Rauchgeschmack, die Rauchfeuchtigkeit und/oder den CO2-Wert gemessen. Besonders vorteilhaft erfolgt die Messung von Parametern des erzeugten Rauchs kontinuierlich, so dass eine permanente Überwachung der Raucherzeugungsvorrichtung gegeben ist und gegebenenfalls während des Erzeugungsvorgangs des Rauchs Einfluss auf diesen genommen werden kann.

Vorteilhaft ist eine Steuerungseinrichtung zur Steuerung und Beeinflussung der gemessenen Parameter vorgesehen, was eine für den entsprechenden Zweck optimale Raucherzeugung ermöglicht. Diese Steuerungseinrichtung steuert beispielsweise Armaturen, wie z. B. Frischluftklappen oder Schieber, um die gewünschten Werte des erzeugten Rauchs zu gewährleisten.

Vorzugsweise ist eine Löscheinrichtung zum Einbringen eines Löschmittels in die Raucherzeugungsvorrichtung vorgesehen, so dass in einem Brandfall innerhalb der Raucherzeugungsvorrichtung der Brand einfach gelöscht werden kann. Ist das Löschmittel beispielsweise Wasser kann mittels der Löscheinrichtung auch nur eine derart bemessene Menge an Wasser in die Raucherzeugungsvorrichtung eingebracht werden, so dass der erzeugte Rauch befeuchtet und somit seine Feuchtigkeitswerte erhöht werden.

Vorteilhaft umfasst die Löscheinrichtung zumindest eine Düse, welche ein gezieltes Einbringen des Löschmittels, insbesondere von Wasser, in die Raucherzeugungsvorrichtung ermöglicht.

Weiter vorteilhaft ist eine Steuerungseinrichtung zur Steuerung des Einbringens des Löschmittels in die Raucherzeugungsvorrichtung vorgesehen, was insbesondere bei einer Funktion der Löscheinrichtung auch zum Befeuchten des erzeugten Rauchs vorteilhaft ist.

Die vorgenannten Steuerungseinrichtungen können einzeln an beziehungsweise in der Raucherzeugungsvorrichtung vorgesehen sein. Alternativ werden zumindest zwei, jedoch besonders vorteilhaft alle Steuereinrichtungen der Raucherzeugungsvorrichtung zu einer Steuereinheit zusammengefasst, welche einerseits kompakt ausgebildet werden kann und einfache Anschlussmöglichkeiten für Versorgungskabel und Verbindungskabel bietet. Vorteilhaft sind die Steuerungseinrichtungen beziehungsweise die Steuereinheit mittels eines Programms gesteuert, was eine einfache Anpassung der Parameter entsprechend der Wünsche des Anwenders ermöglicht. Bevorzugt wird eine entsprechend ausgebildete Elektronikeinheit vorgesehen, welche vorteilhaft eine für die Verwendung des Programms ausgerichtete Rechnereinheit umfasst. Weiter vorteilhaft ist ein User-Interface vorgesehen, z. B. eine Tastatur, eine Computermaus, ein Touchscreen oder dergleichen, damit ein Anwender einfach die Raucherzeugungsvorrichtung entsprechend der gewünschten beziehungsweise erforderlichen Randbedingungen anpassen beziehungsweise steuern kann.

Die Aufgabe für die Reibeinrichtung einer vorgenannten Raucherzeugungsvorrichtung wird durch die Merkmale des unabhängigen Anspruchs 13 gelöst. Vorteilhafte Weiterbildungen sind in den Figuren und in den vom Anspruch 13 abhängigen Patentansprüchen dargelegt.

Gemäss der Erfindung umfasst die Reibeinrichtung einander gegenüberliegende Scheibenebenen, wobei die Reibfläche an zumindest einer der einander gegenüberliegenden Scheibenebenen vorgesehen ist. Diese Reibfläche der Reibeinrichtung weist Erhebungen und/oder Vertiefungen auf.

Eine Reibeinrichtung in Form einer Reibscheibe ermöglicht eine einfache Ausgestaltung und Anordnung derselben innerhalb der Raucherzeugungsvorrichtung. Eine derartige Reibeinrichtung weist somit eine scheibenförmige Ausgestaltung auf. Die Reibfläche der Reibscheibe ist vorteilhaft an zumindest einer der einander gegenüberliegenden Scheibenebenen vorgesehen, womit ein Abtrag des rauchfähigen Guts bei dessen Bewegung relativ zur Reibfläche der Reibeinrichtung in vorteilhafter Weise gewährleistet ist.

Die auf der Reibfläche vorgesehenen Erhebungen und/oder Vertiefungen unterstützen den Abtrag des rauchfähigen Guts. Eine derartige Reibfläche wirkt wie eine Feile, welche das rauchfähige Gut beziehungsweise die im Kontaktbereich mit der Reibeinrichtung vorhandene Asche abraspelt und abtransportiert. Die Ausgestaltungen der Erhebungen und/oder der Vertiefungen wird vorteilhaft derart gewählt, dass entsprechend der Art des Materials des rauchfähigen Guts ein vorteilhafter Abtrag desselben für eine optimale Raucherzeugung im Betrieb der Raucherzeugungsvorrichtung erfolgt.

Die Erhebungen sind beispielsweise als Zähne, Höcker oder Nocken ausgebildet. Die Vertiefungen sind beispielsweise als Rillen, Gruben oder (teil-)sphärische Ausnehmungen ausgebildet, wobei zumindest einzelne Vertiefungen auch als die Reibeinrichtung durchdringende Durchführöffnungen ausgebildet sein können. Des Weiteren können auf der gleichen Reibfläche einer Reibeinrichtung zumindest eine Erhebung und zumindest eine Vertiefung miteinander kombiniert werden. Vorteilhaft wird entsprechend der Art und/oder der spezifischen Materialeigenschaften des rauchfähigen Guts die für den Abtrag optimale Ausgestaltung der Erhebungen und/oder der Vertiefungen gewählt.

Vorzugsweise sind Erhebungen erster Art und Erhebungen zumindest zweiter Art an der Reibfläche der Reibeinrichtung vorgesehen, wobei die Erhebungen erster Art unterschiedlich zu den Erhebungen zweiter Art sind. Verschiedene Ausgestaltungen von Erhebungen werden somit auf einer Reibfläche miteinander kombiniert, womit sich auf einfache Weise die Art und Effizienz der Abtragung des rauchfähigen Guts und somit die Raucherzeugung z. B. entsprechend der gewünschten Intensität des Rauchs oder der Art des verwendeten rauchfähigen Guts optimieren lässt.

Alternativ sind Vertiefungen erster Art und Vertiefungen zumindest zweiter Art an der Reibfläche der Reibeinrichtung vorgesehen, wobei die Vertiefungen erster Art unterschiedlich zu den Vertiefungen zweiter Art sind. Verschiedene Ausgestaltungen von Vertiefungen werden somit auf einer Reibfläche miteinander kombiniert, womit sich auf einfache Weise die Art und Effizienz der Abtragung des rauchfähigen Guts und somit die Raucherzeugung z. B. entsprechend der gewünschten Intensität des Rauchs oder der Art des verwendeten rauchfähigen Guts optimieren lässt.

In einer weiteren Alternative werden an der Reibfläche der Reibeinrichtung Erhebungen erster Art und/oder Erhebungen zumindest zweiter Art sowie Vertiefungen erster Art und/oder Vertiefungen zumindest zweiter Art miteinander kombiniert.

In einer besonders vorteilhaften Ausführung der scheibenförmigen Reibeinrichtung (Reibscheibe) ist an beiden, einander gegenüberliegenden Scheibenebenen jeweils eine Reibfläche vorgesehen. Ist eine der Reibflächen abgenutzt, kann die gleiche Reibscheibe umgedreht in der Raucherzeugungsvorrichtung nochmals angeordnet und weiter verwendet werden, so dass wieder ein vorteilhafter Aschenabtrag gewährleistet ist und gleichzeitig nicht die gesamte Reibeinrichtung ausgetauscht werden muss.

Weiter ist es denkbar, die einander gegenüberliegenden Reibflächen einer Reibeinrichtung unterschiedlich auszugestalten. Eine solche Reibeinrichtung kann derart ausgerichtet in der Raucherzeugungsvorrichtung angeordnet werden, dass beispielsweise entsprechend der Materialeigenschaften von unterschiedlichem rauchfähigen Gut ein für die Raucherzeugung idealer Aschenabtrag erfolgt.

Eine erfindungsgemässe Räucheranlage umfasst eine erfindungsgemässe Raucherzeugungsvorrichtung, welche einzelne oder alle der vorgenannten Merkmale aufweist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile,

Es zeigen dabei:
- Fig. 1: eine erfindungsgemässe Raucherzeugungsvorrichtung in einer Seitenansicht mit offenen Schranktüren,
- Fig. 2: einen Schnitt durch die Raucherzeugungsvorrichtung gemäss der Fig. 1,
- Fig. 3: eine erste Ausführungsform einer erfindungsgemässen Reibeinrichtung in Form einer Reibscheibe in einer Aufsicht auf deren Reibfläche,
- Fig. 4: die Reibeinrichtung gemäss der Fig. 3 in einer Seitenansicht,
- Fig. 5: einen Aufnahmebehälter für das rauchfähige Gut in einer perspektivischen Seitenansicht;
- Fig. 6: den Aufnahmebehälter gemäss der Fig. 5 in einer Draufsicht;
- Fig. 7: eine schematisch dargestellte erfindungsgemässe Räucheranlage;
- Fig. 8: eine zweite Ausführungsform einer erfindungsgemässen Reibeinrichtung in Form einer Reibscheibe in einer Aufsicht auf deren Reibfläche; und
- Fig. 9: die Reibeinrichtung gemäss der Fig. 8 in einer perspektivischen Draufsicht.

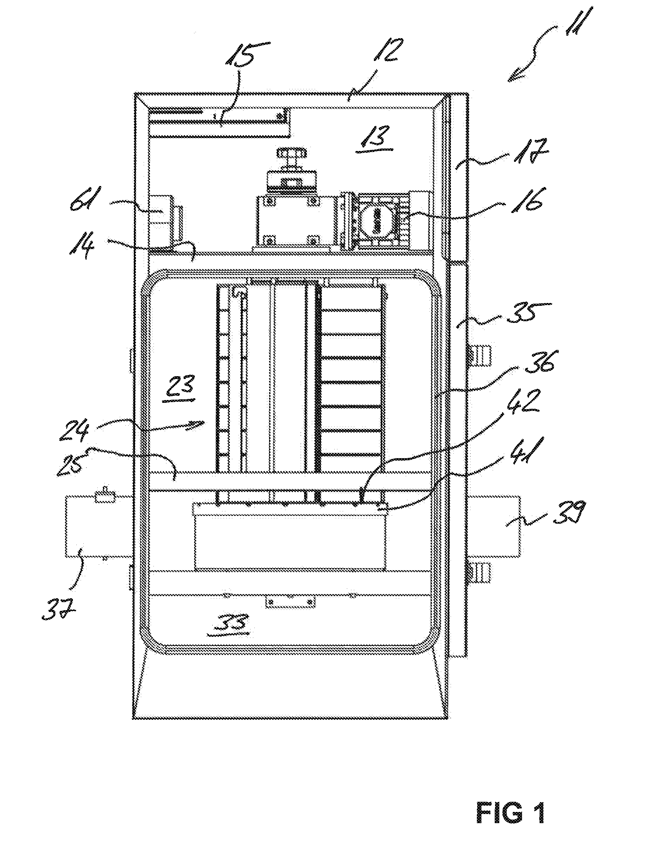

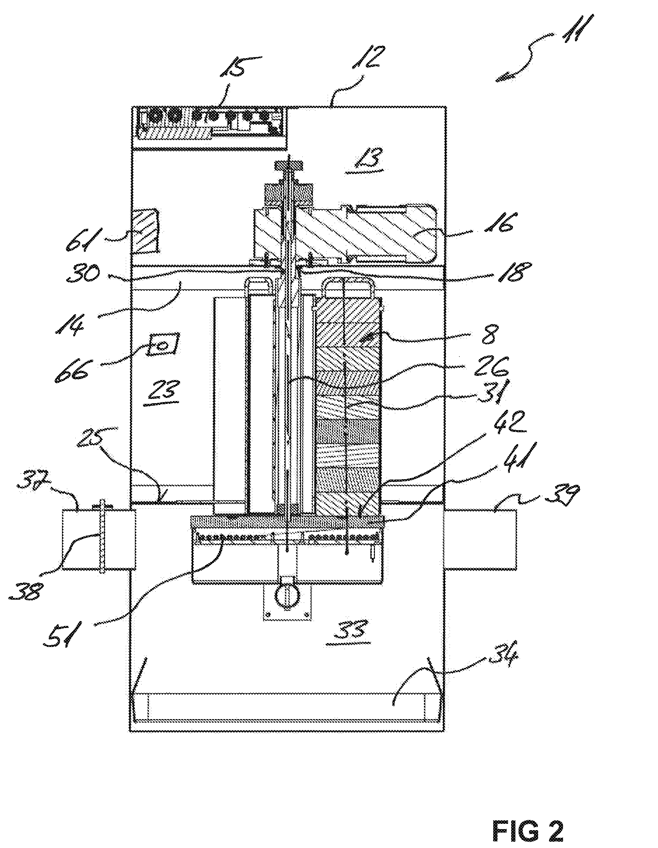

Die in den Figuren 1 und 2 dargestellte Raucherzeugungsvorrichtung 11 zur Erzeugung von Rauch, insbesondere von Rauch zur Behandlung von Lebensmitteln, mittels rauchfähigem Gut 8 weist einen Schrank 12 auf, der vorteilhaft aus Metall beziehungsweise aus Blech gefertigt ist und der mehrere Abteile aufweist. Das in Bezug auf die Darstellungen in den Figuren 1 und 2 oben dargestellte Versorgungsabteil 13 ist von dem benachbarten Aufnahmeraum 23 für das rauchfähige Gut durch eine Trennebene 14 vorteilhaft rauchdicht abgetrennt. In dem Versorgungsabteil 13 ist einerseits eine Elektronikeinheit 15 angeordnet, welche mehrere Steuerungseinheiten zur Steuerung der nachfolgend noch beschriebenen Einrichtungen umfasst beziehungsweise beinhaltet. Weiter ist als Antriebsmittel der Antriebseinrichtung 16 ein Motor, z. B. ein Elektromotor, im Versorgungsabteil 13 vorgesehen. Das Antriebsmittel treibt einen im Aufnahmeraum 23 angeordneten Aufnahmebehälter 24 zur Aufnahme des rauchfähigen Guts 8 an. In der Trennebene 14 ist eine Öffnung 18 für eine Antriebswelle 30 des Aufnahmebehälters 24 vorgesehen, welche vorteilhaft gegen den Durchtritt von Rauch aus dem Aufnahmeraum 23 in das Versorgungsabteil 13 abgedichtet ist. Das Versorgungsabteil 13 ist über eine erste Schranktüre 17 des Schranks 12 zugänglich.

In Bezug auf die Darstellungen in den Figuren 1 und 2 unterhalb des Aufnahmebehälters 24 ist eine Reibeinrichtung 41 mit einer dem Aufnahmeraum 23 zugewandten Reibfläche 42 vorgesehen. Die Reibeinrichtung 41 ist scheibenförmig ausgebildet und kann somit auch als Reibscheibe bezeichnet werden. Die Reibfläche 42 der Reibeinrichtung 41 ist an einer der einander gegenüberliegenden Scheibenebenen vorgesehen. Die Reibeinrichtung 41 ist in diesem Beispiel drehfest und auch ortsfest in der Raucherzeugungsvorrichtung 11 angeordnet.

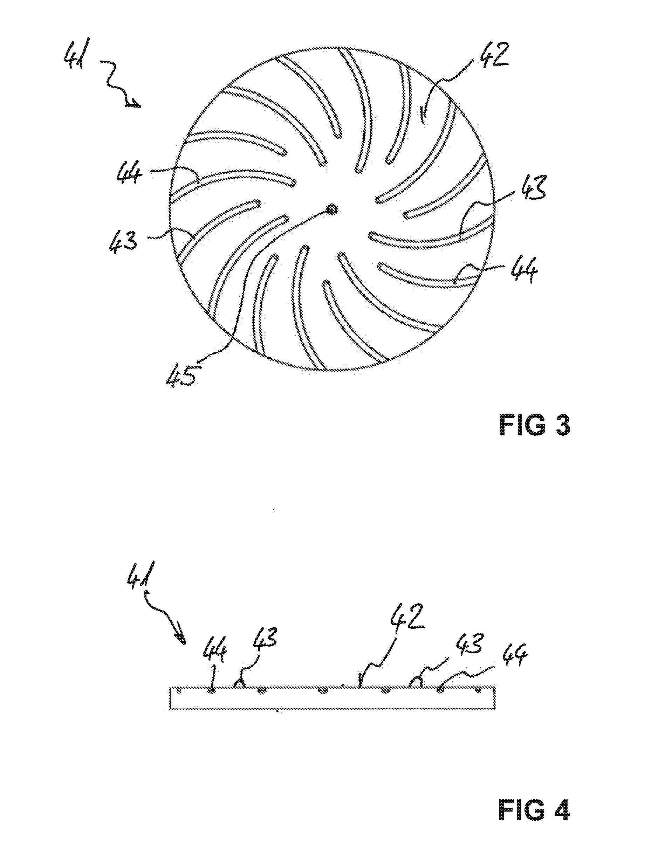

In den vergrösserten Darstellungen gemäss den Figuren 3 und 4 ist ersichtlich, dass die Reibfläche 42 der scheibenförmigen Reibeinrichtung 41 mit hier dem Zentrum zugewandten Erhebungen 43 und Vertiefungen 44 versehen ist, welche zumindest bereichsweise bogenabschnittsförmig verlaufen.

Wie insbesondere aus der Figur 2 ersichtlich, ist - bezogen auf die gezeigte Darstellung unterhalb - benachbart zu der Reibeinrichtung 41 eine elektrisch betriebene Heizeinrichtung 51 zum Erhitzen der Reibeinrichtung 41 vorgesehen. Die Heizeinrichtung 51 ist hier integrierter Bestandteil der Reibeinrichtung 41 und bildet somit mit dieser ein einfach auswechselbares, vorteilhaft einteiliges Bauteil aus. In der Elektronikeinheit 15 ist eine Steuerungseinrichtung zur Steuerung der Temperatur der Heizeinrichtung 51 vorgesehen.

Am - auf die Darstellungen in den Figuren 1 und 2 bezogen - unteren Ende des Schrankes 12 ist ein Bodenabteil 33 vorgesehen, welches durch ein mit zumindest einer für den Aufnahmebehälter 24 vorgesehenen Öffnung versehenes Trennblech 25 von dem Aufnahmeraum 23 getrennt ist. Im Bodenabteil 33 wird ein Wasserbad vorgesehen. Von der Reibeinrichtung 41 abgetragenes rauchfähiges Gut 8 fällt in dieses Wasserbad und wird automatisch gelöscht, sofern es noch glüht oder brennt. Im Bodenabteil 33 beziehungsweise im Wasserbad ist ein bedarfsweise entnehmbares Aschengitter 34 vorgesehen, so dass das sich im Wasserbad befindliche abgetragene Material des rauchfähigen Guts 8 einfach aus dem Wasserbad entnehmbar ist und entsorgt werden kann.

Der Aufnahmeraum 23 und das Bodenabteil 33 sind über eine gemeinsame zweite Schranktür 35 des Schrankes 12 zugänglich. Entlang des Randes der durch die von der zweiten Schranktüre 35 zugänglichen Öffnung des Schrankes 12 ist ein umlaufendes Dichtelement 36, beispielsweise eine Gummidichtung, vorgesehen, welche bei geschlossener zweiter Schranktüre 35 den Aufnahmeraum 23 und das Bodenabteil 33 rauchdicht nach aussen abschliesst.

Weiter ist ein Zuluftkanalabschnitt 37 vorgesehen, der in das Bodenabteil 33 mündet und in dem eine Steuerklappe 38 zur Steuerung des Zuluftstroms z. B. von aufbereitetem Rauch oder Frischluft vorgesehen ist. Die Steuerklappe 38 ist vorteilhaft von einer, besonders vorteilhaft in der Elektronikeinheit 15 vorgesehenen, Steuereinrichtung steuerbar. Der in der Raucherzeugungsvorrichtung 11 erzeugte Rauch dringt durch einen zum Bodenabteil 33 hin offenen Abluftkanalabschnitt 39 aus der Raucherzeugungsvorrichtung 11 heraus und wird einer hier nicht dargestellten Räucherkammer beziehungsweise Klimatisierungseinrichtung zugeführt, in welcher das mit Rauch zu behandelnde Lebensmittel vorgesehen ist.

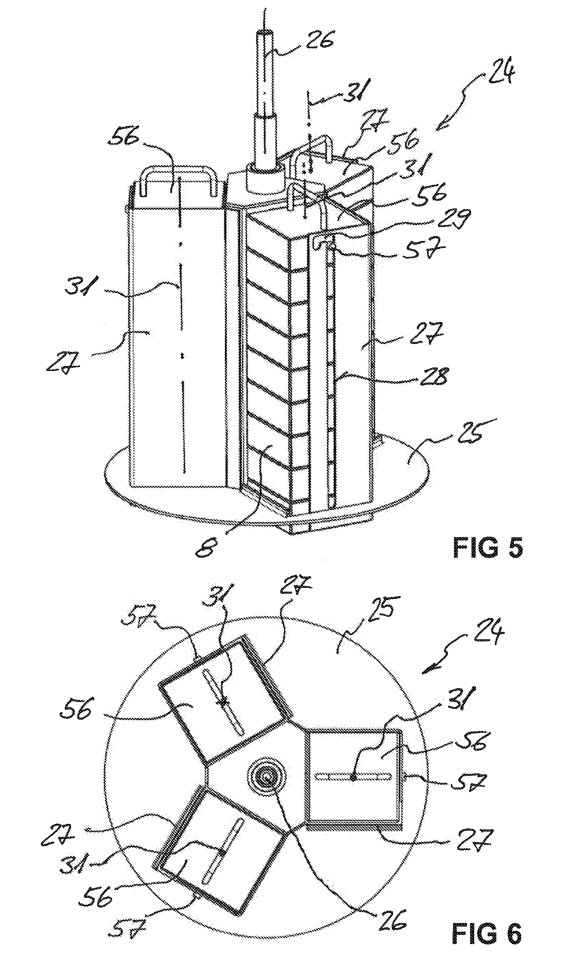

Der Aufnahmebehälter 24 (siehe auch Figuren 5 und 6) weist drei, zu einer Aufnahmebehälterrotationsachse 26 rotationssymmetrisch angeordnete, parallel zueinander verlaufende Aufnahmeabteile 27 zur Aufnahme des rauchfähigen Guts 8 auf. Das rauchfähigen Gut 8 ist dadurch derart im Aufnahmeraum 23 angeordnet, dass das rauchfähige Gut 8 im Betrieb der Antriebseinrichtung 16 exzentrisch zu einem Zentrum 45 der Reibfläche 42 der Reibeinrichtung 41 über diese geführt ist.

Die Aufnahmebehälterrotationsachse 26 ist senkrecht zu einer von der Reibfläche 42 der Reibeinrichtung 41 aufgespannten Ebene ausgerichtet. Entlang der Aufnahmebehälterrotationsachse 26 erstreckt sich die Antriebswelle 30 des Aufnahmebehälters 24.

Der Aufnahmebehälter 24 beziehungsweise dessen Aufnahmeabteile 27 sind jeweils offen in Richtung der Reibfläche 42 der Reibeinrichtung 41 ausgebildet. Jedes Aufnahmeabteil 27 weist eine Längsmittelachse 31 auf, die beabstandet zu der Aufnahmebehälterrotationsachse 26 bzw. zum Zentrum 45 der Reibeinrichtung 41 verläuft.

Der Aufnahmebehälter 24 ist über die Antriebseinrichtung 16 um seine Aufnahmebehälterrotationsachse 26 rotierbar und somit relativ sowie in eine Richtung im Wesentlichen parallel zu der von Reibfläche 42 der Reibeinrichtung 41 aufgespannten Ebene bewegbar. Die Bewegung des Aufnahmebehälters 24 erfolgt gesteuert über eine in der Elektronikeinheit 15 vorgesehene Steuereinrichtung. Dabei kann der Aufnahmebehälter 24 kontinuierlich, mit wechselnden Geschwindigkeiten und/oder in Intervallen relativ zur Reibeinrichtung 41 bewegt werden.

Anhand der unterschiedlichen Schraffuren des rauchfähigen Guts 8 in der Figur 2 sind schematisch verschiedene Materialarten des rauchfähigen Guts 8 dargestellt. Die unterschiedlichen Materialien werden übereinandergeschichtet in den Aufnahmeabteilen 27 vorgesehen. Dabei können in den unterschiedlichen Aufnahmeabteilen 27 gleichartige oder voneinander verschiedenartige Schichtungen des rauchfähigen Guts 8 vorgesehen werden.

An dem Ende jedes Aufnahmeabteils 27, das der Reibfläche 42 der Reibeinrichtung 41 gegenüberliegt, ist ein Vortriebsmittel 56 in Form eines mit einem Griffabschnitt versehenen Gewichtselementes für die kontinuierliche Förderung des rauchfähigen Guts 8 in Richtung der Reibeinrichtung 41 vorgesehen. In einer Seitenwand jedes Aufnahmeabteils 27 ist eine Kulissenführung 28 vorgesehen, in welcher ein Führungsstift bzw. Führungspin 57 des Vortriebsmittels 56 geführt ist. An dem dem Trennblech 25 abgewandten Ende der Kulissenführung 28 ist ein Kurvenabschnitt 29 vorgesehen, in welchem z. B. zum Beschicken des entsprechenden Aufnahmeabteils 27 mit neuem rauchfähigem Gut 8 das Vortriebsmittel 56 in einer unverschieblichen Position fixierbar ist.

Weiter ist eine Rauchmesseinrichtung 61 mit mehreren, verteilt in der Raucherzeugungsvorrichtung 11, beispielsweise im Aufnahmeraum 23 und/oder im Bodenabteil 33 angeordneten, hier nicht im Detail dargestellten Sensoren vorgesehen. Die Rauchmesseinrichtung 61 misst kontinuierlich verschiedene Parameter des in der Raucherzeugungsvorrichtung 11 erzeugten Rauchs. Die Rauchmesseinrichtung 61 ist mit einer, ebenfalls in der Elektronikeinheit 15 vorgesehenen Steuerungseinrichtung zur Steuerung und Beeinflussung der gemessenen Parameter verbunden.

Zudem ist eine Löscheinrichtung 66 zum Einbringen eines Löschmittels in den Aufnahmeraum 23 der Raucherzeugungsvorrichtung 11 vorgesehen, welche mit einer, ebenfalls in der Elektronikeinheit 15 vorgesehenen Steuerungseinrichtung zur Steuerung des Einbringens des Löschmittels in die Raucherzeugungsvorrichtung 11 verbunden ist. Das Löschmittel ist in diesem Ausführungsbeispiel Wasser.

Vorteilhaft ist die Löscheinrichtung 66 derart ausgerichtet, dass auch in das Bodenabteil 33 Löschmittel eingebracht werden kann. Dabei ist es in einer hier nicht dargestellten Alternative auch denkbar, eine Löscheinrichtung vorzusehen, welche nur in den Bereich des Bodenabteils 33 bedarfsweise Löschmittel einbringt.

Nachfolgend wird ein Verfahren zur Erzeugung von Rauch mittels der Raucherzeugungsvorrichtung 11 beschrieben. Die scheibenförmige Reibeinrichtung 41 wird mittels der integrierten Heizeinrichtung 51 auf eine Temperatur vorgeheizt, welche vorteilhaft auf eine schnelle Aschenbildung der entsprechenden Materialart des rauchfähigen Guts 8 abgestimmt ist. Das rauchfähige Gut 8 ist dabei bereits mit der Reibfläche 42 der Reibeinrichtung 41 in Kontakt. Sobald sich eine entsprechende Aschenkruste gebildet hat, wird über die Antriebseinrichtung 16 der Aufnahmebehälter 24 in Rotation versetzt und dadurch relativ zur Reibeinrichtung 41 bewegt. Dabei wird die Aschenkruste von der Reibfläche 42 der Reibeinrichtung 41 sukzessive abgetragen und der gewünschte Rauch erzeugt.

Alternativ kann zuerst der Aufnahmebehälter 24 in Rotation versetzt und erst dann die Reibeinrichtung 41 mittels der Heizeinrichtung 51 erhitzt werden.

Aufgrund der von der Rauchmesseinrichtung 61 gemessenen Parameter des Rauchs wird beispielsweise die Rotationsgeschwindigkeit des Aufnahmebehälters 24 verändert, Wasser über die Löscheinrichtung 66 in den Aufnahmeraum 23 bzw. in das Bodenabteil 33 eingebracht und/oder die Luftzufuhr über die Stellung der Steuerklappe 38 verändert. Als Ergebnis tritt aus dem Abluftkanalabschnitt 39 ein Rauch aus, welcher die gewünschten Eigenschaften zur Behandlung beziehungsweise zur Veredelung des entsprechenden Lebensmittels aufweist.

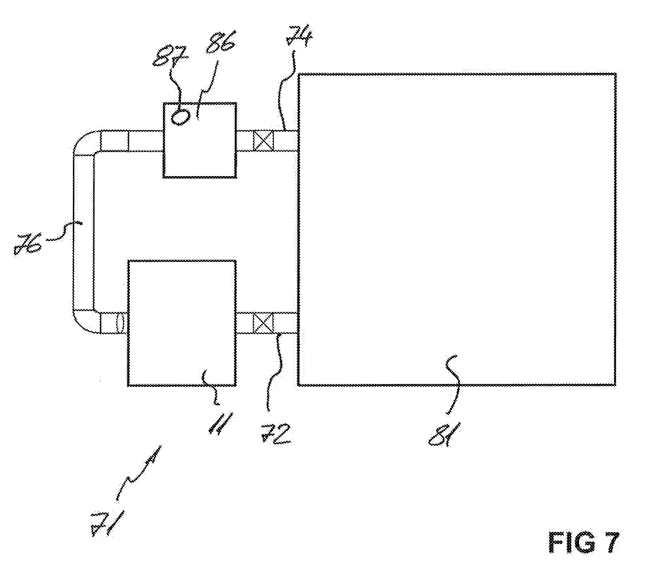

Die in der Figur 7 gezeigte Räucheranlage 71 umfasst eine Raucherzeugungsvorrichtung 11 zur Erzeugung von Rauch mittels eines rauchfähigen Guts 8. Die Raucherzeugungsvorrichtung 11 weist zumindest einen Teil der vorgenannten Merkmale auf und ist über einen ersten Verbindungskanal 72 mit einer Klimatisierungseinrichtung 81 verbunden. In der Klimatisierungseinrichtung 81 sind die mit Rauch zu behandelnden Lebensmittel vorgesehen. Durch einen zweiten Verbindungskanal 74 tritt der Rauch aus der Klimatisierungseinrichtung 81 wieder aus. Der zweite Verbindungskanal 74 mündet in eine Abluftbehandlungseinrichtung 86, in welcher der Rauch beispielsweise gewaschen und/oder über einen Abgaskanal 87 in die Umgebung, vorteilhaft gefiltert, abgegeben wird. Dem Rauch in der Abluftbehandlungseinrichtung 86 kann z. B. Frischluft zugeführt werden. In diesem Beispiel ist die Abluftbehandlungseinrichtung 86 über einen dritten Verbindungskanal 76 mit der Raucherzeugungsvorrichtung 11 verbunden. Die Rauchanlage 71 weist somit einen geschlossenen Kreislauf für den in der Raucherzeugungsvorrichtung 11 erzeugten Rauch auf und ist somit eine Kreislaufanlage.

In dem ersten Verbindungskanal 72 ist ein Absperrelement 73 und im zweiten Verbindungskanal 74 ist ein weiteres Absperrelement 75 vorgesehen, damit gegebenenfalls der Durchströmquerschnitt in dem entsprechenden Verbindungskanal 72 bzw. 74 eingeschränkt oder zumindest einer der Verbindungskanäle 72 oder 74 vollständig geschlossen werden kann, beispielsweise in einem Brandfall.

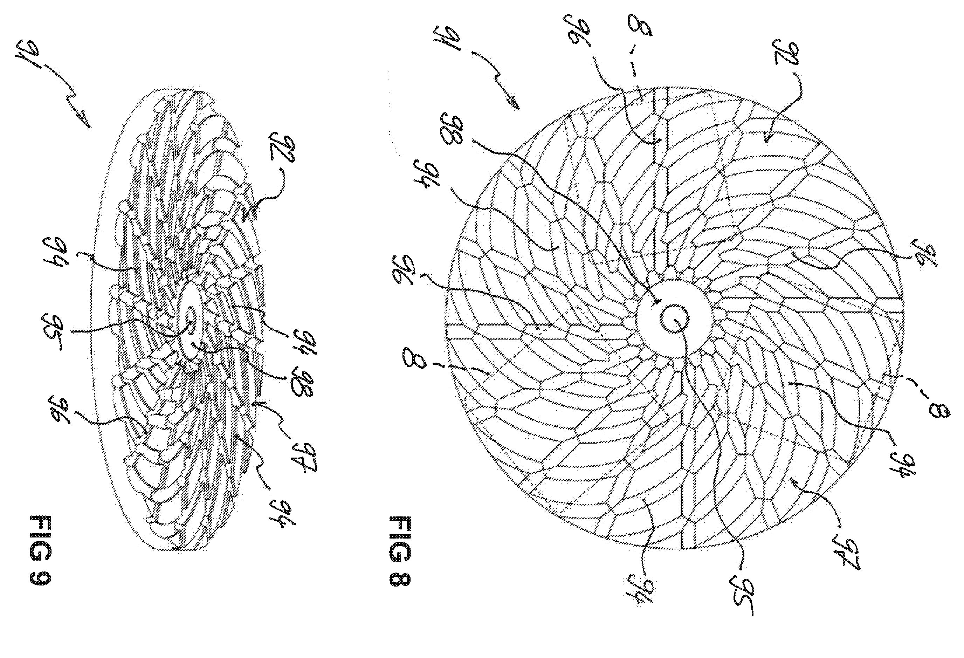

Die in den Figuren 8 und 9 gezeigte Reibeinrichtung 91 für eine Raucherzeugungsvorrichtung 11 unterscheidet sich von der zuvor beschriebenen Reibeinrichtung 41 durch die Ausgestaltung der Reibfläche 92. Die Reibfläche 92 der Reibeinrichtung 91 weist Vertiefungen 94 erster Art und Vertiefungen 96 zweiter Art auf. Die Vertiefungen 96 zweiter Art verlaufen gradlinig bis zum Aussenumfang der scheibenförmigen Reibeinrichtung 91, jedoch gegenüber dem Radius der Reibeinrichtung 91 abgewinkelt und nicht auf das Zentrum 95 der Reibeinrichtung 91 ausgerichtet. Die Vertiefungen 94 erster Art verlaufen bogenabschnittsförmig, radial beabstandet vom Zentrum 95 der Reibeinrichtung 91 jeweils in einer Vertiefungen 96 zweiter Art beginnend und bis zum Aussenumfang der scheibenförmigen Reibeinrichtung 91. Die Vertiefungen 94 erster Art und die Vertiefungen 96 zweiter Art sind unterschiedlich zueinander, weisen jedoch in der beispielhaft gezeigten Ausführungsform der Reibeinrichtung 91 im Wesentlichen die gleiche Tiefe bezogen auf die Scheibenebene auf, welche mit der Reibfläche 92 versehen ist. Um das Zentrum 95 der Reibeinrichtung 91 herum ist ein Bereich 98 ohne jegliche Vertiefung oder Erhebung ausgebildet.

Die Vertiefungen 94 erster Art dienen im Wesentlichen dem Abtrag des rauchfähigen Guts 8 und die Vertiefungen 96 zweiter Art dienen im Wesentlichen der Abfuhr von abgetragenem rauchfähigen Gut 8 in Richtung des Aussenumfangs der Reibeinrichtung 91.

Gestrichelt sind drei Holzstücke als rauchfähiges Gut 8 angedeutet. Diese Holzstücke sind derart auf der Reibfläche 92 geführt, dass diese vollständig ausserhalb des Zentrums 95 der Reibeinrichtung 91 liegen. Die rauchfähigen Güter 8 werden bezogen auf die Darstellung gemäss Figur 8 vorteilhaft im Gegenuhrzeigersinn um das Zentrum 95 der Reibeinrichtung 91 geführt.

**Bezugszeichenliste**

| | | | |
|---|---|---|---|
| 8 | rauchfähiges Gut | 51 | Heizeinrichtung |
| | | | |
| 11 | Raucherzeugereinrichtung | 56 | Vortriebsmittel |
| 12 | Schrank | 57 | Führungspin v. 56 |
| 13 | Versorgungsabteil | | |
| 14 | Trennabschnitt | 61 | Rauchmesseinrichtung |
| 15 | Elektronikeinheit | | |
| 16 | Antriebseinrichtung | 66 | Löscheinrichtung |
| 17 | 1. Schranktüre | | |
| 18 | Öffnung f. 30 in 14 | 71 | Rauchanlage |
| | | 72 | 1. Verbindungskanal |
| 23 | Aufnahmeraum | 73 | Absperrelement in 72 |
| 24 | Aufnahmebehälter | 74 | 2. Verbindungskanal |
| 25 | Trennblech | 75 | Absperrelement in 74 |
| 26 | Rotationsachse v. 24 | 76 | 3. Verbindungskanal |
| 27 | Aufnahmeabteil | | |
| 28 | Kulissenführung | 81 | Klimatisierungseinrichtung |
| 29 | Kurvenabschnitt v. 28 | | |
| 30 | Antriebswelle v. 24 | 86 | Abluftbehandlungseinrichtung |
| 31 | Längsmittelachse v. 27 | 87 | Abgaskanal |
| | | | |
| 33 | Bodenabteil | 91 | Reibeinrichtung |
| 34 | Aschengitter | 92 | Reibfläche |
| 35 | 2. Schranktüre | | |
| 36 | Dichtelement | 94 | Vertiefung 1. Art |
| 37 | Zuluftkanalabschnitt | 95 | Zentrum v. 91/92 |
| 38 | Steuerklappe | 96 | Vertiefung 2. Art |
| 39 | Abluftkanalabschnitt | 97 | Scheibenebene |
| | | 98 | Bereich v. 91 |
| 41 | Reibeinrichtung | | |
| 42 | Reibfläche | | |
| 43 | Erhebung | | |
| 44 | Vertiefung | | |
| 45 | Zentrum v. 41/42 | | |

## Patentansprüche

1. Raucherzeugungsvorrichtung zur Erzeugung von Rauch, insbesondere von Rauch zur Behandlung von Lebensmitteln, mittels rauchfähigen Guts (8) mit einem Aufnahmeraum (23) für das rauchfähige Gut (8) und einer Reibeinrichtung (41; 91), die eine dem Aufnahmeraum (23) zugewandte Reibfläche (42; 92) für den Abtrag des rauchfähigen Guts (8) aufweist, wobei zur Erzeugung des Rauchs beziehungsweise zum Abtrag des rauchfähigen Guts (8) dieses mittels einer Antriebseinrichtung (16) relativ und in eine Richtung im Wesentlichen parallel zur Reibfläche (42; 92) der Reibeinrichtung (41; 91) bewegbar ist, **dadurch gekennzeichnet, dass** das rauchfähige Gut (8) derart im Aufnahmeraum (23) angeordnet ist, dass das rauchfähige Gut (8) im Betrieb der Antriebseinrichtung (16) exzentrisch zu einem Zentrum (45; 95) der Reibfläche (42; 92) der Reibeinrichtung (41; 91) über diese geführt ist.

2. Raucherzeugungsvorrichtung nach Anspruch 1, **dadurch gekennzeichnet, dass** die Reibeinrichtung (41; 91) drehfest und vorteilhaft ortsfest in der Raucherzeugungsvorrichtung (11) angeordnet ist.

3. Raucherzeugungsvorrichtung nach Anspruch 1 oder 2, **dadurch**
**gekennzeichnet, dass** die Reibeinrichtung (41; 91) eine Reibscheibe umfasst, an der die Reibfläche (42; 92) ausgebildet ist, wobei die Reibfläche (42; 92) vorteilhaft an zumindest einer der einander gegenüberliegenden Scheibenebenen (97) vorgesehen ist.

4. Raucherzeugungsvorrichtung nach einem der Ansprüche 1 bis 3, **dadurch gekennzeichnet, dass** eine Heizeinrichtung (51) zum Erhitzen der Reibeinrichtung (41) vorgesehen ist, wobei die Heizeinrichtung (51) vorteilhaft elektrisch betrieben ist und weiter vorteilhaft die Heizeinrichtung (51) integrierter Bestandteil der Reibeinrichtung (41) ist.

5. Raucherzeugungsvorrichtung nach Anspruch 4, **dadurch gekennzeichnet, dass** eine Steuerungseinrichtung zur Steuerung der Temperatur der Heizeinrichtung (51) vorgesehen ist.

6. Raucherzeugungsvorrichtung nach einem der Ansprüche 1 bis 5, **dadurch gekennzeichnet, dass** zumindest ein Aufnahmebehälter (24) für das rauchfähige Gut (8) im Aufnahmeraum (23) vorgesehen ist, der zumindest bereichsweise in Richtung der Reibfläche (42) der Reibeinrichtung (41) offen ist.

7. Raucherzeugungsvorrichtung nach Anspruch 6, **dadurch gekennzeichnet, dass** der Aufnahmebehälter (24), vorzugsweise gesteuert, relativ zur Reibeinrichtung (41) bewegbar ist.

8. Raucherzeugungsvorrichtung nach Anspruch 6 oder 7, **dadurch gekennzeichnet, dass** der zumindest eine Aufnahmebehälter (24) um eine Aufnahmebehälterrotationsachse (26) rotierbar ist, wobei die Aufnahmebehälterrotationsachse (26) vorteilhaft im Wesentlichen senkrecht zu einer von der Reibfläche (42; 92) der Reibeinrichtung (41; 91) aufgespannten Ebene ausgerichtet ist.

9. Raucherzeugungsvorrichtung nach einem der Ansprüche 6 bis 8, **dadurch gekennzeichnet, dass** der zumindest eine Aufnahmebehälter (24) zumindest zwei, vorteilhaft parallel zueinander verlaufende Aufnahmeabteile (27) zur Aufnahme des rauchfähigen Guts (8) aufweist, wobei jedes Aufnahmeabteil (27) eine Längsmittelachse (31) aufweist, die beabstandet zur Aufnahmebehälterrotationsachse (26) des zumindest einen Aufnahmebehälters (24) verläuft.

10. Raucherzeugungsvorrichtung nach einem der Ansprüche 1 bis 9, **dadurch gekennzeichnet, dass** zumindest ein Vortriebsmittel (56) für die Förderung des rauchfähigen Guts (8) in Richtung der Reibeinrichtung (41) vorgesehen ist.

11. Raucherzeugungsvorrichtung nach einem der Ansprüche 1 bis 10, **dadurch gekennzeichnet, dass** eine Rauchmesseinrichtung (61) zur vorteilhaft kontinuierlichen Messung von Parametern des erzeugten Rauchs vorgesehen ist, wobei vorteilhaft eine Steuerungseinrichtung zur Steuerung und Beeinflussung dieser gemessenen Parameter vorgesehen ist.

12. Raucherzeugungsvorrichtung nach einem der Ansprüche 1 bis 11, **dadurch gekennzeichnet, dass** eine Löscheinrichtung (66) zum Einbringen eines Löschmittels in die Raucherzeugungsvorrichtung (11) vorgesehen ist, wobei vorteilhaft eine Steuerungseinrichtung zur Steuerung des Einbringens des Löschmittels in die Raucherzeugungsvorrichtung (11) vorgesehen ist.

13. Reibeinrichtung für eine Raucherzeugungsvorrichtung nach einem der Ansprüche 1 bis 12, die eine Reibscheibe mit einander gegenüberliegenden Scheibenebenen (97) umfasst, wobei die Reibfläche (42; 92) an zumindest einer der einander gegenüberliegenden Scheibenebenen (97) vorgesehen ist, **dadurch gekennzeichnet, dass** die Reibfläche (42; 92) der Reibeinrichtung (41; 91) Erhebungen (43) und/oder Vertiefungen (44; 94, 96) aufweist.

14. Reibeinrichtung nach Anspruch 13, **dadurch gekennzeichnet, dass** Erhebungen erster Art und Erhebungen zumindest zweiter Art vorgesehen sind, wobei die Erhebungen erster Art unterschiedlich zu den Erhebungen zweiter Art sind, und/oder dass Vertiefungen (94) erster Art und Vertiefungen (96) zumindest zweiter Art an der Reibfläche (92) der Reibeinrichtung (91) vorgesehen sind, wobei die Vertiefungen (94) erster Art unterschiedlich zu den Vertiefungen (96) zweiter Art sind.

15. Räucheranlage (71) mit einer Raucherzeugungsvorrichtung (11) nach einem der Ansprüche 1 bis 12.

## Claims

1. A smoke generation device for the generation of smoke, in particular smoke for the treatment of foodstuffs, by means of smoke-generating material (8), with an accommodation space (23) for the smoke-generating material (8), and a friction unit (41; 91), which has a friction surface (42; 92) facing towards the accommodation space (23) for the removal of the smoke-generating material (8), wherein
for the generation of smoke and/or the removal of the smoke-generating material (8) the latter can be moved by means of a drive unit (16) relative to, and in a direction essentially parallel to, the friction surface (42; 92) of the friction unit (41; 91),
**characterised in that**,
the smoke-generating material (8) is arranged in the accommodation space (23) such that during operation of the drive unit (16) the smoke-generating material (8) is guided by means of the latter eccentrically with respect to a centre (45; 95) of the friction surface (42; 92) of the friction unit (41; 91).

2. The smoke generation device in accordance with claim 1,
**characterised in that**,
the friction unit (41; 91) is arranged in the smoke generation device (11) such that it cannot rotate, and advantageously such that it cannot move.

3. The smoke generation device in accordance with claim 1 or 2,
**characterised in that**,
the friction unit (41; 91) comprises a friction disk, on which the friction surface (42; 92) is formed, wherein
the friction surface (42; 92) is advantageously provided on at least one of the opposing planes (97) of the disk.

4. The smoke generation device in accordance with one of the claims 1 to 3,
**characterised in that**,
a heating unit (51) is provided for purposes of heating the friction unit (41), wherein
the heating unit (51) is advantageously operated electrically, and furthermore the heating unit (51) is advantageously an integrated component of the friction unit (41).

5. The smoke generation device in accordance with claim 4,
**characterised in that**,
a control unit is provided for purposes of controlling the temperature of the heating unit (51).

6. The smoke generation device in accordance with one of the claims 1 to 5,
**characterised in that**,
at least one accommodation container (24) is provided in the accommodation space (23) for the smoke-generating material (8), which accommodation container (24) in at least some regions is open in the direction of the friction surface (42) of the friction unit (41).

7. The smoke generation device in accordance with claim 6,
**characterised in that**,
the accommodation container (24) can be moved relative to the friction unit (41), preferably in a controlled manner.

8. The smoke generation device in accordance with claim 6 or 7,
**characterised in that**,
the at least one accommodation container (24) can be rotated about an accommodation container axis of rotation (26), wherein
the accommodation container axis of rotation (26) is advantageously aligned essentially at right angles to a plane spanned by the friction surface (42; 92) of the friction unit (41; 91).

9. The smoke generation device in accordance with one of the claims 6 to 8,
**characterised in that**,
the at least one accommodation container (24) has at least two accommodation compartments (27), advantageously running parallel to one another, for the accommodation of the smoke-generating material (8), wherein
each accommodation compartment (27) has a longitudinal central axis (31), which runs at a distance spaced apart from the accommodation container axis of rotation (26) of the accommodation container (24).

10. The smoke generation device in accordance with one of the claims 1 to 9,
**characterised in that**,
at least one means of advancement (56) is provided for the conveyance of the smoke-generating material (8) in the direction of the friction unit (41).

11. The smoke generation device in accordance with one of the claims 1 to 10,
**characterised in that**,
a smoke measurement unit (61) is provided for the advantageously continuous measurement of parameters of the smoke generated, wherein
a control unit is advantageously provided for purposes of controlling and manipulating the said measured parameters.

12. The smoke generation device in accordance with one of the claims 1 to 11,
**characterised in that**,
an fire-extinguishing unit (66) is provided for purposes of introducing a fire-extinguishing agent into the smoke generation device (11), wherein
a control unit is advantageously provided for purposes of controlling the introduction of the fire-extinguishing agent into the smoke generation device (11).

13. The friction unit for a smoke generation device in accordance with one of the claims 1 to 12, which comprises a friction disk, with opposing disk planes (97), wherein
the friction surface (42; 92) is advantageously provided on at least one of the opposing planes (97) of the disk,
**characterised in that**,
the friction surface (42; 92) of the friction unit (41; 91) has protrusions (43) and/or depressions (44; 94, 96).

14. The friction unit in accordance with claim 13, **characterised in that**,
protrusions of a first type and protrusions of at least a second type are provided, wherein
the protrusions of the first type differ from the protrusions of the second type,
and/or **in that**,
depressions (94) of a first type and depressions (96) of at least a second type are provided on the friction surface (92) of the friction unit (91), wherein
the depressions (94) of the first type differ from the depressions (96) of the second type.

15. A smoking plant (71) with a smoke generation device (11) in accordance with one of the claims 1 to 12.

## Revendications

1. Dispositif générateur de fumées pour produire de la fumée, en particulier de la fumée pour traiter des produits alimentaires, au moyen de matériau pouvant faire de la fumée (8), comprenant un espace de réception (23) pour le matériau pouvant faire de la fumée (8) et un dispositif de friction (41 ; 91) qui présente une face de friction (42 ; 92) tournée vers l'espace de réception (23) pour enlever le matériau pouvant faire de la fumée (8), dans lequel pour produire la fumée, respectivement pour enlever le matériau pouvant faire de la fumée (8), celui-ci peut être déplacé par rapport à, et en direction essentiellement parallèle à, la face de friction (42 ; 92) du dispositif de friction (41 ; 91) au moyen d'un dispositif d'entraînement (16), **caractérisé en ce que** le matériau pouvant faire de la fumée (8) est ainsi disposé dans l'espace de réception (23) que lorsque le dispositif d'entraînement (16) fonctionne, le matériau pouvant faire de la fumée (8) est dirigé de façon excentrée vers un centre (45 ; 95) de la face de friction (42 ; 92) du dispositif de friction (41 ; 91) par le biais de celui-ci.

2. Dispositif générateur de fumées selon la revendication 1, **caractérisé en ce que** le dispositif de friction (41 ; 91) est disposé fixe en rotation et avantageusement fixement dans le dispositif générateur de fumées (11).

3. Dispositif générateur de fumées selon la revendication 1 ou 2, **caractérisé en ce que** le dispositif de friction (41 ; 91) comprend un disque de friction sur lequel la face de friction (42 ; 92) est formée, dans lequel la face de friction (42 ; 92) est prévue avantageusement sur au moins l'un des plans de disque (97) opposés entre eux.

4. Dispositif générateur de fumées selon l'une des revendications 1 à 3, **caractérisé en ce qu'**un dispositif de chauffage (51) pour chauffer le dispositif de friction (41) est prévu, dans lequel le dispositif de chauffage (51) est avantageusement entraîné de façon électrique et plus encore avantageusement, le dispositif de chauffage (51) fait partie intégrante du dispositif de friction (41).

5. Dispositif générateur de fumées selon la revendication 4, **caractérisé en ce qu'**un dispositif de commande est prévu pour commander la température du dispositif de chauffage (51).

6. Dispositif générateur de fumées selon l'une des revendications 1 à 5, **caractérisé en ce qu'**au moins un récipient de réception (24) pour le matériau pouvant faire de la fumée (8) est prévu dans l'espace de réception (23), lequel est ouvert au moins par tronçons en direction de la face de friction (42) du dispositif de friction (41).

7. Dispositif générateur de fumées selon la revendication 6, **caractérisé en ce que** le récipient de réception (24) est disposé mobile, de préférence commandé, par rapport au dispositif de friction (41).

8. Dispositif générateur de fumées selon la revendication 6 ou 7, **caractérisé en ce que** l'au moins un récipient de réception (24) peut tourner sur un axe de rotation de récipient de réception (26), dans lequel l'axe de rotation de récipient de réception (26) est avantageusement orienté essentiellement verticalement à un plan tendu à partir de la face de friction (42 ; 92) du dispositif de friction (41 ; 91).

9. Dispositif générateur de fumées selon l'une des revendications 6 à 8, **caractérisé en ce que** l'au moins un récipient de réception (24) présente au moins deux compartiments de réception (27), avantageusement parallèles entre eux, pour recevoir le matériau pouvant faire de la fumée (8), dans lequel chaque compartiment de réception (27) présente un axe médian longitudinal (31) qui est distant de l'axe de rotation de récipient de réception (26) de l'au moins un récipient de réception (24).

10. Dispositif générateur de fumées selon l'une des revendications 1 à 9, **caractérisé en ce qu'**au moins un moyen d'avancement (56) pour transporter le matériau pouvant faire de la fumée (8) en direction du dispositif de friction (41) est prévu.

11. Dispositif générateur de fumées selon l'une des revendications 1 à 10, **caractérisé en ce qu'**un dispositif de mesure de fumée (61) est prévu pour la mesure avantageusement continue de paramètres de la fumée produite, dans lequel un dispositif de commande est avantageusement prévu pour commander et agir sur ces paramètres mesurés.

12. Dispositif générateur de fumées selon l'une des revendications 1 à 11, **caractérisé en ce qu'**un dispositif d'extinction (66) pour introduire un agent extincteur dans le dispositif générateur de fumées (11) est prévu, dans lequel un dispositif de commande est avantageusement prévu pour commander l'introduction de l'agent extincteur dans le dispositif générateur de fumées (11).

13. Dispositif de friction pour un dispositif générateur de fumées selon l'une des revendications 1 à 12, qui comprend un disque de friction avec des plans de friction (97) opposés entre eux, dans lequel la face de friction (42 ; 92) est prévue sur au moins l'un des plans de disque (97) opposés entre eux, **caractérisé en ce que** la face de friction (42 ; 92) du dispositif de friction (41 ; 91) présente des bossages (43) et/ou des creux (44 ; 94, 96).

14. Dispositif de friction selon la revendication 13, **caractérisé en ce que** des bossages d'un premier type et des bossages d'au moins un second type sont prévus, dans lequel les bossages d'un premier type sont différents des bossages d'un second type, et/ou que des creux (94) d'un premier type et des creux (96) d'au moins un second type sont prévus sur la face de friction (92) du dispositif de friction (91), dans lequel les creux (94) d'un premier type sont différents des creux (96) d'un second type.

15. Installation de fumage (71) comprenant un dispositif générateur de fumées (11) selon l'une des revendications 1 à 12.
